Europäisches Patentamt

European Patent Office

Office européen des brevets

(11) Veröffentlichungsnummer : **0 052 310**
**B1**

(12) # EUROPÄISCHE PATENTSCHRIFT

(45) Veröffentlichungstag der Patentschrift :
**15.05.85**

(51) Int. Cl.⁴ : **B 62 D 55/30**

(21) Anmeldenummer : **81109519.9**

(22) Anmeldetag : **05.11.81**

(54) Gleiskettenspanneinrichtung, insbesondere bei einem Raupenschlepper.

(30) Priorität : **17.11.80 US 207167**

(43) Veröffentlichungstag der Anmeldung :
**26.05.82 Patentblatt 82/21**

(45) Bekanntmachung des Hinweises auf die Patenterteilung : **15.05.85 Patentblatt 85/20**

(84) Benannte Vertragsstaaten :
**DE FR GB IT**

(56) Entgegenhaltungen :
**EP-A- 0 010 446**
**FR-A- 2 331 473**
**FR-A- 2 340 237**
**US-A- 3 008 772**
**US-A- 3 332 725**
**US-A- 3 980 351**

(73) Patentinhaber : **DEERE & COMPANY**
**1 John Deere Road**
**Moline Illinois 61265 (US)**

(72) Erfinder : **Ragon, Danny Lee**
**7682 Hilltop Road**
**East Dubuque Illinois 61025 (US)**

(74) Vertreter : **Gramm, Werner, Prof. Dipl.-Ing. et al**
**Patentanwälte Gramm + Lins Theo-**
**dor-Heuss-Strasse 2**
**D-3300 Braunschweig (DE)**

**Beschreibung**

Die Erfindung betrifft eine Gleiskettenspanneinrichtung, insbesondere bei einem Raupenschlepper, bestehend aus einem Gleiskettenrahmen, an dessen vorderem Ende ein Leitrad verschiebbar gelagert und an dessen hinterem Ende fluchtend mit dem Leitrad ein Federwiderlager fest montiert sind, wobei sich das Leitrad an dem Federwiderlager über eine zusammendrückbare Spreize abstützt, die eine Spannfeder, einen Gleiskettenjustierer, eine Verschiebestange und ein Leitradjoch umfaßt, die hintereinander in Reihe aneinanderliegend angeordnet sind und noch folgende Merkmale aufweisen :

— Die Spannfeder stützt sich einerseits am Federwiderlager und andererseits an einem Flansch eines in die Spannfeder gesteckten Führungsteils ab ;

— in einem Zylinder ist ein Kolben verschiebbar geführt, der durch Flüssigkeit, Schmierfett o. dgl. beaufschlagbar ist, das wahlweise über eine Befülleinrichtung in den Zylinderraum eingeführt, oder aber aus diesem durch eine Ablaßeinrichtung abgelassen werden kann ;

— von der Zylinder-Kolben-Kombination liegt ein Teil an dem genannten Führungsteil und das andere Teil an dem einen Ende der Verschiebestange an ;

— bei der Befüllung des Zylinderraumes zur Erzeugung einer Vorspannung der Spannfeder liegt das genannte andere Teil der Zylinder-Kolben-Kombination an einem Anschlag des Gleiskettenrahmens an ;

— von Hand zu betätigende Vorspannmittel arretieren die Spannfeder in ihrer vorgespannten Lage und erlauben unter Aufrechterhaltung der Vorspannung einen Druckablaß im Zylinderraum.

Eine derartige Ausführungsform läßt sich z. B. der amerikanischen Patentschrift 3 980 351 entnehmen. Hier besteht das genannte Führungsteil aus einem Bolzen, gegen dessen Flansch der genannte Zylinder mit seinem geschlossen ausgebildeten Boden anliegt. Dieser Zylinder ist verschiebbar in einer Spannbuchse geführt, die durch eine Öffnung in der stirnseitigen Wandung eines die Spannfeder aufnehmenden Gehäuses ragt. Durch Bohrungen eines Flansches der Spannbuchse sind verhältnismäßig lange Kopfschrauben gesteckt, die in Gewinde der genannten Stirnwandung des Federgehäuses eingeschraubt sind. Durch Anziehen dieser Schrauben wird somit der Abstand zwischen dem Federgehäuse und dem Flansch der Spannbuchse verringert. Der im Zylinder verschiebbar geführte Kolben liegt mit seinem aus dem Zylinder ragenden Ende an einem rahmenfesten Anschlag an, wenn die Vorspannung auf die Spannfeder aufgebracht werden soll.

Diese vorbekannte Vorrichtung ist so ausgelegt, daß die Spannfeder in ungespanntem Zustand von oben in das Federgehäuse eingelegt werden kann. Über einen in dem genannten Zylinder vorgesehenen Schmiernippel kann in den Zylinderraum zwischen Zylinder-Auch die US-A-3 332 725 offenbart eine bei einem Raupenschlepper vorgesehene Gleiskettenspanneinrichtung vergleichbarer Bauart. Hier stützt sich die Spannfeder einerseits an einem Federwiderlager und andererseits an einem Flansch eines in die Spannfeder gesteckten Führungsteils ab, das hülsenförmig ausgebildet ist und in dem ein Kolben fest angeordnet, ein diesem Kolben zugeordneter Zylinder jedoch längsverschieblich geführt sind. Das dem Kolben abgewandte Ende des Zylinders ist durch ein Kopfteil verschlossen, das die vorstehend erwähnte Befüll- und Ablaßeinrichtung aufweist. Jedoch liegt bei der Befüllung des Zylinderraumes zur Erzeugung einer Vorspannung der Spannfeder kein Teil der Zylinder-Kolben-Kombination an einem Anschlag des Gleiskettenrahmens an. Es sind auch keine von Hand zu betätigende Vorspannmittel vorgesehen, die die Spannfeder in ihrer vorgespannten Lage arretieren und unter Aufrechterhaltung der Vorspannung einen Druckablaß im Zylinderraum erlauben.

Der Erfindung liegt die Aufgabe zugrunde, die eingangs erläuterte Vorrichtung hinsichtlich ihrer Handhabung sicherer zu gestalten.

Diese Aufgabe wird gemäß der Erfindung durch folgende Merkmale gelöst :

boden und Kolbenoberfläche Fett eingepreßt werden ; dadurch wird die Zylinder-Kolben-Kombination auseinandergedrückt, so daß sich der Zylinder mit seinem geschlossenen Boden am Flansch des in die Feder eingesteckten Führungsteils und der Kolben mit seinem gegenüberliegenden Ende gegen den genannten gestellfesten Anschlag anlegen. Durch weiteres Fetteinpressen erfolgt dann ein Zusammendrücken der Spannfeder auf den gewünschten Wert. Um die Spannfeder in dieser komprimierten Position zu arretieren, werden die genannten Kopfschrauben von Hand angezogen, bis die Spannbuchse gegen den Flansch des Führungsteils anliegt. Anschließend kann der Druck aus dem Zylinderraum abgelassen werden, so daß sich der Kolben von dem gestellfesten Anschlag lösen läßt. Nunmehr kann die eingangs erwähnte Verschiebestange eingebaut werden, die sich mit ihrem einen Ende am Kolben abstützt. Durch erneutes Einpressen von Fett in den genannten Zylinderraum wird das Leitradjoch beaufschlagt.

Nachteilig bei dieser Konstruktion ist die erforderliche Manipulation der Kopfschrauben zum Nachspannen der Spannbuchse. Diese Manipulation ist auch gefährlich, da sie im Verschiebebereich des Gleiskettenjustierers liegt.

Ein weiterer Nachteil ist darin zu sehen, daß sich sowohl der Kolben als auch der Zylinder verdrehen können, so daß die optimale Zuordnung des Schmiernippels bzw. der Fettkanäle nicht immer gewährleistet ist.

a) Das Führungsteil wird durch ein hülsenförmiges Gleiskettenjustiergehäuse gebildet, in dem der genannte Kolben fest angeordnet und der genannte Zylinder längsverschieblich geführt sind ;

b) das dem Kolben abgewandte Ende des Zylinders ist durch ein Kopfteil verschlossen, das die genannte Befüll- und Ablaßeinrichtung aufweist und bei Erzeugung des Federvorspannung an dem genannten Anschlag anliegt ;

c) der Flansch des Gleiskettenjustiergehäuses weist sich gegenüberliegende Gleitstücke auf, die in Führungsnuten von Gleiskettenjustierführungen eingreifen, die beidseitig des Gleiskettenjustiergehäuses und parallel hierzu angeordnet sind ;

d) die genannten Vorspannmittel werden durch ein Paar Vorspanndistanzstücke gebildet, die im Verschiebeweg des genannten Flansches lösbar an den Gleiskettenjustierführungen befestigt sind und für den Flansch einen Anschlag bilden.

Dabei ist es vorteilhaft, wenn die Vorspanndistanzstücke je eine Handhabe aufweisen, die oberhalb des Verschiebeweges des Gleiskettenjustierers liegen. Jedes Vorspanndistanzstück kann aber auch zwei sich von der Oberseite vertikal nach unten erstreckende Fingereingriffsbohrungen aufweisen. In jedem Fall kann bei der erfindungsgemäßen Konstruktion die Handhabung bei der Arretierung der Spannfeder in ihrer komprimierten Stellung gefahrlos erfolgen, da die Hände der Bedienungsperson außerhalb des Verschiebeweges des Gleiskettenjustierers bleiben können.

Ebenfalls unter dem Gesichtspunkt der Sicherheit ist es vorteilhaft, wenn jede Gleiskettenjustierführung einen oberen, die Führungsnut nach oben abdeckenden Flansch aufweist, in dessen jeweils eine der Außenkontur der genannten Gleitstücke entsprechende Einschuböffnung angeordnet ist und zwar an einer Stelle, deren Abstand von dem genannten Federwiderlager zumindest der Länge der entspannten Spannfeder entspricht. Die Spannfeder läßt sich somit in ungespannter Stellung einbauen ; unmittelbar nach dem Beginn der Komprimierung der Spannfeder sind die Gleitstücke des Flansches des Gleiskettenjustiergehäuses auch von oben her zwangsgeführt, so daß ein Ausbrechen des Gleiskettenjustierers nach oben ausgeschlossen ist.

Es ist zweckmäßig, wenn der Anschlag des Gleiskettenrahmens in Form eines umgedrehten U ausgebildet und lösbar auf einem Querrahmen befestigt ist, der fest mit zwei auch die Gleiskettenjustierführungen bildenden Seitenschienen verbunden ist. Dadurch besteht die Möglichkeit, die Komprimierung der Spannfeder mit einer separaten Spanneinrichtung durchzuführen, die nach dem Ausbau des Anschlags zwischen den genannten Querrahmen und das Kopfteil des Zylinders eingesetzt wird.

Weitere bevorzugte Merkmale der Erfindung sind Gegenstand der unabhängigen Ansprüche.

In der Zeichnung ist eine als Beispiel dienende Ausführungsform der Erfindung dargestellt. Es zeigen :

Figur 1 in schematischer Darstellung die Seitenansicht eines Raupenschleppers ;

Figur 2 in vergrößertem Maßstab in Seitenansicht die rechte Gleiskettenanordnung mit Gleiskettenspanneinrichtung

Figur 3 in erneut vergrößertem Maßstab in Draufsicht einen Ausschnitt des rechten Gleiskettenrahmens mit der Gleiskettenspanneinrichtung in Arbeitsstellung ;

Figur 4 einen Schnitt gemäß der Linie 4-4 in Figur 3 ;

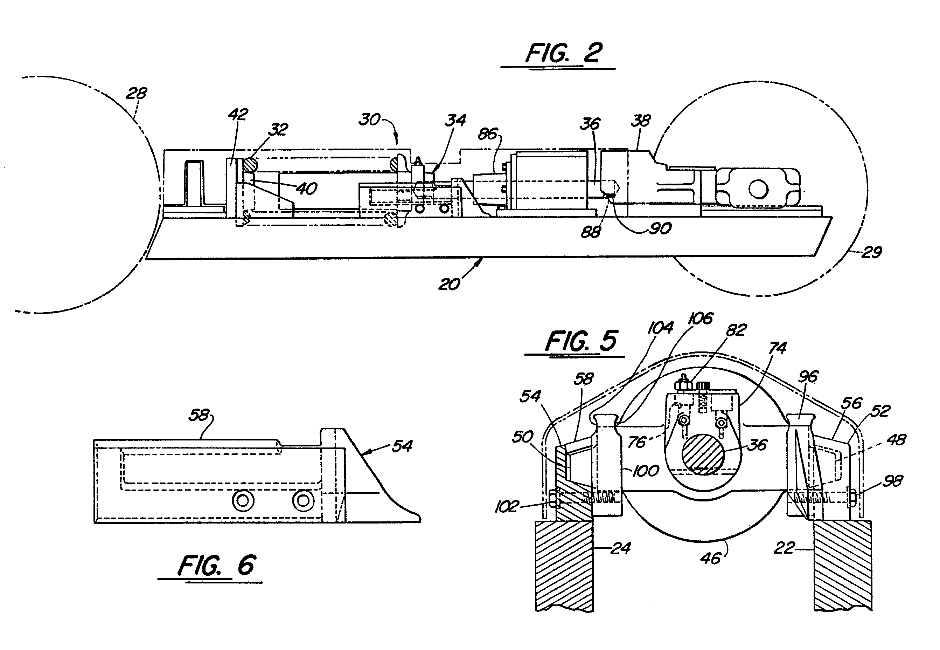

Figur 5 einen Schnitt gemäß der Linie 5-5 in Figur 3 ;

Figur 6 in vergrößertem Maßstab in Seitenansicht die rechte Gleiskettenjustierführung und

Figur 7 in perspektivischer Darstellung eine abgewandelte Ausführungsform für ein Vorspanndistanzstück.

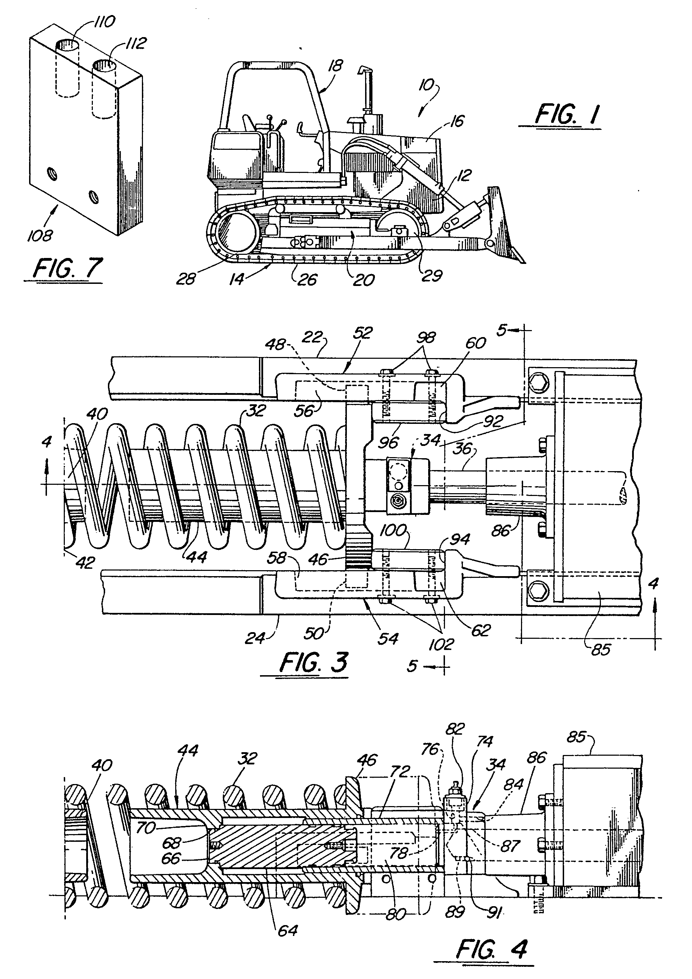

Figur 1 zeigt einen Raupenschlepper 10, bei dem die vorliegende Erfindung angewendet werden kann. Dieser Raupenschlepper umfaßt im wesentlichen einen Hauptrahmen 12, der im wesentlichen von einer rechten und einer (in der Zeichnung nicht dargestellten) linken Gleiskettenanordnung 14 getragen wird. Der Antrieb des Raupenschleppers ist in einem Maschinengehäuse 16 im vorderen Bereich des Hauptrahmens 12 untergebracht, während in dessen hinterem Bereich eine Fahrerkabine 18 angeordnet ist.

Da sich rechte und linke Gleiskettenanordnung 14 entsprechen, wird nachfolgend nur die rechte Anordnung näher erläutert. Sie umfaßt einen sich in Längsrichtung erstreckenden Gleiskettenrahmen 20, der mit Abstand parallel nebeneinander liegende innere und äußere Seitenschienen 22, 24 aufweist. Der Gleiskettenrahmen 20 liegt innerhalb einer endlos umlaufenden Gleiskette 26, die um ein vom Hauptrahmen 20 getragenes Antriebskettenrad 28 sowie um ein Leitrad 29 herumgeführt ist, das zwischen den Seitenschienen 22, 24 angeordnet und auf diesen so gelagert ist, daß es vor und zurück verschoben werden kann.

Eine Gleiskettenspanneinrichtung 30 (siehe insbesondere Figur 2) dient dazu, das Leitrad 29 federnd gegen die Gleiskette 26 zu drücken, um so eine gewünschte Gleiskettenspannung aufrechtzuerhalten, und ermöglicht außerdem den Durchtritt von Störkörpern zwischen Antriebskettenrad 28 und Gleiskette 26. Diese Gleiskettenspanneinrichtung 30 ist in Form einer zusammendrückbaren Spreize ausgebildet, da die einzelnen Teile in Reihe hinter- und aneinanderliegend angeordnet sind. Die Gleiskettenspanneinrichtung umfaßt im wesentlichen eine Spannfeder 32, einen Gleiskettenjustierer 34, eine Verschiebestange 36 sowie ein Leitradjoch 38.

Gemäß den Figuren 2 bis 4 stützt sich die Spannfeder 32 mit ihrem rückwärtigen Ende an einem Federwiderlager 40 ab, das mittig zwischen den beiden Seitenschienen 22, 24 an einem Rahmenteil 42 befestigt ist, das seinerseits die beiden genannten Seitenschienen miteinander verbindet. Der Gleiskettenjustierer 34 umfaßt ein zylindrisches, hülsenförmig ausgebildetes Gleiskettenjustiergehäuse 44, das in das nach vorn weisende Ende der Spannfeder 32 eingeschoben ist und mit einem Flansch 46 an diesem Federende anliegt. Die Spannfeder wird mit ihrem rückwärtigen Ende von dem in sie hineinragenden Federwiderlager 40 und an ihrem anderen Ende von dem Gleiskettenjustiergehäuse 44 getragen, das hierzu an seinem Flansch 46 sich gegenüberliegende Gleitstücke 48, 50 aufweist, die in Führungsnuten von Gleiskettenjustierführungen 52, 54 eingreifen, die an den Seitenschienen 22, 24 befestigt sind und jeweils einen oberen, die Führungsnut nach oben abdeckenden Flansch 56, 58 aufweisen. In letzterem ist jeweils eine der Außenkontur der genannten Gleitstücke 48, 50 entsprechende Einschuböffnung 60, 62 angeordnet und zwar an einer Stelle, deren Abstand von dem genannten Federwiderlager 40 der Länge der entspannten Spannfeder 32 zuzüglich der Dicke des Flansches 46 entspricht. Beim Ein- bzw. Ausbau des Gleiskettenjustierers werden also die Gleitstücke des genannten Flansches 46 von oben in die Einschuböffnungen 60, 62 eingeführt, um bereits nach einer ersten kleinen Verschiebung des Flansches 48 die oberen Flansche 56, 58 der Gleiskettenjustierführung 52, 54 zu untergreifen. Dadurch wird verhindert, daß die Spannfeder aus dieser Gleitführung ausbrechen kann.

Zur Vorspannung der Spannfeder 32 wird das Gleiskettenjustiergehäuse 44 durch eine hydraulische Spanneinrichtung nach hinten verschoben. Letztere umfaßt einen Kolben 64, der zentrisch im Gleiskettenjustiergehäuse 44 angeordnet ist und mit einem Endteil 66 verringerten Durchmessers in eine Kolbenzentrieröffnung 68 einer Trennwand 70 des Gleiskettenjustiergehäuses eingreift. Ferner umfaßt die hydraulische Spanneinrichtung einen Zylinder 72, der in dem vorderen Ende des Gleiskettenjustiergehäuses 44 verschiebbar gelagert ist, mit seinem offenen hinteren Ende verschiebbar auf dem Kolben 64 geführt ist und an seinem vorderen Ende über ein Kopfteil 74 verschlossen ist. Letzteres weist eine vertikale, mit einem Einschraubgewinde versehene Fettbefüllbohrung 76 auf, die in einen Schmierkanal 78 mündet, der seinerseits in einen Zylinderraum 80 mündet, der vom Kolben und Zylinderkopfteil begrenzt ist. In die Fettbefüllbohrung 76 ist ein Schmiernippel 82 eingeschraubt, so daß mit einer üblichen Fettpresse Fett in den genannten Zylinderraum 80 gepreßt werden kann. Oberhalb vom unteren Ende des Schmiernippels 82 mündet in die Fettbehälterbohrung 76 ein Ablaßkanal 84, dessen anderes Ende zur Oberfläche des Kopfteils 74 führt. Durch Ausschrauben des Schmiernippels 82 wird zwischen dem Schmierkanal 78 und dem Ablaßkanal 84 eine Strömungsverbindung hergestellt, so daß das in den Zylinderraum 80 eingedrückte Fett, Hydrauliköl o. dgl. abgelassen werden kann.

Auf einem fest mit den beiden Seitenschienen 22, 24 verbundenen Querrahmen 85 ist ein in Form eines umgedrehten U ausgebildeter Anschlag 86 lösbar befestigt, der fluchtend vor dem Kopfteil 74 des Zylinders angeordnet ist und die Verschiebestange 36 umgreift. Letztere ist mit ihrem rückwärtigen Ende in eine Ausnehmung 87 im Kopfteil 74 und mit ihrem vorderen Ende in eine Ausnehmung des Leitradjochs 38 eingeschoben. Die beiden Enden der Verschiebestange 36 sind mit Anflächungen 88, 89 versehen, die an Rollzapfen 90, 91 anliegen, die ihrerseits quer in den genannten Ausnehmungen des Leitradjochs bzw. des Zylinderkopfteils angeordnet sind und eine Verdrehung der Verschiebestange 36 relativ gegenüber dem Leitradjoch 38 bzw. eine Verdrehung des Zylinders 72 gegenüber der Verschiebestange 36 verhindern. Anstelle der Rollzapfen 90, 91 können in der Ausnehmung 87 des Kopfteils sowie in der Ausnehmung des Leitradjochs 38 Gegenflächen angeordnet sein, die an den Anflächungen 88, 89 anliegen.

Der Abstand des Anschlags 86 von den Einschuböffnungen 60, 62 ist etwas größer als die in Längsrichtung gemessene Dicke des Zylinderkopfteils 74. Dadurch kann die Spannfeder 32 vollkommen entspannt in den Gleiskettenrahmen 20 eingebaut werden, in dem zuerst Kolben 64 und Zylinder 72 in das Gleiskettenjustiergehäuse 44 eingesetzt und letzteres dann in das vordere Ende der Spannfeder 32 eingeschoben werden. Anschließend wird dann das hintere Ende der Spannfeder 32 auf das Federwiderlager 40 geschoben ; die Gleitstücke 48, 50 des Gehäuseflansches 46 werden von oben in die Einschuböffnungen 60, 62 abgesenkt. Der Flansch 46 hat dann die in Figur 4 strichpunktiert dargestellte Lage ; das Zylinderkopfteil 74 liegt dicht neben oder unmittelbar am Anschlag 86 an, wie es in Figur 4 in ausgezogenen Linien dargestellt ist.

Anschließend kann dann die Spannfeder 32 in ihre Arbeitsstellung vorgespannt werden und zwar entweder mit Hilfe einer Fettpresse, mit der Fett über den Schmiernippel 82 in den Zylinderraum 80 gepreßt wird, oder aber mit Hilfe einer anderen geeigneten Drückvorrichtung, die nach dem Ausbau des Anschlags 86 zwischen den Querrahmen 85 und das Zylinderkopfteil 74 eingesetzt werden kann. Bei Verwendung einer Fettpresse beaufschlagt das in den Zylinderraum 80 eingepreßte Fett den Kolben 64, worauf sich zuerst das Zylinderkopfteil 74 gegen den Anschlag 86 anlegen wird, um erst anschließend das Gleiskettenjustiergehäuse 44 nach hinten zu drücken und so die Spannfeder 32 in die gewünschte Stellung zusammenzudrücken. Solange aber das Zylinderkopfteil 74 am Anschlag 86 anliegt, könnte sich der Gleiskettenjustierer 34 nicht ausdehnen, um eine Längung der Gleiskette 26 auszugleichen, die beispielsweise durch Verschleiß auftreten kann. Deshalb muß eine Einrichtung vorgesehen werden, um die vorgespannte Spannfeder 32 in vorgespannter Lage zu arretieren, während das Zylinderkopfteil 74 vom Anschlag 86 abgezogen und in die in Figur 3 dargestellte Position gebracht wird, die etwa der Stellung bei Verwendung einer noch neuen Gleiskette entspricht. Die Gleiskettenjustierführungen 52, 54 weisen hierfür Anschlagflächen 92, 94 auf, die im Verschiebeweg des Flansches 46 liegen. Ein erstes Vorspanndistanzstück 96 liegt mit seiner vorderen Stirnfläche gegen die genannte Anschlagfläche 92 an und wird in seiner Stellung festgehalten durch Schraubbolzen 98, die durch die innere Gleiskettenjustierführung 52 hindurchgesteckt und in Gewindelöcher des Vorspanndistanzstückes eingeschraubt sind. Entsprechend liegt ein zweites Vorspanndistanzstück 100 mit seiner vorderen Stirnfläche an der Anschlagfläche 94 an und wird in dieser Stellung durch Schraubbolzen 102 festgehalten. Das Einsetzen der Vorspanndistanzstücke 96, 100 erfolgt, nachdem der Gleiskettenjustierer 34 betätigt worden ist, um die Feder 32 etwas über ihre übliche Arbeitsstellung hinaus zusammenzudrücken. Durch Losschrauben des Schmiernippels 82 wird dann Fett aus dem Zylinderraum 80 durch den Schmierkanal 78 und den Ablaßkanal 84 hindurch abgelassen. Durch diesen Druckabfall bewegt sich der Flansch 46 nach vorn bis zur Anlage an die Vorspanndistanzstücke 96, 100 und nimmt so den bisher auf den Zylinderraum 80 wirkenden Druck. Durch Wahl von Vorspanndistanzstücken unterschiedlicher Länge läßt sich die Vorspannkraft der Feder variieren.

Aus Sicherheitsgründen weisen die Vorspanndistanzstücke 96, 100 sich in Längsrichtung auf beiden Seiten erstreckende Ausnehmungen 104, 106 im oberen Teil der Vorspanndistanzstücke auf, die eine Handhabe bilden und so den Ein- bzw. Ausbau dieser Teile ermöglichen, ohne die Hände in den Verschiebebereich des Flansches 46 bringen zu müssen.

Figur 7 zeigt eine abgewandelte Ausführungsform für ein Vorspanndistanzstück 108. Hier sind zwei sich von der Oberseite vertikal nach unten erstreckende Fingereingriffsbohrungen 110, 112 vorgesehen, die ebenfalls eine Handhabung der Vorspanndistanzstücke erlauben, ohne in den durch den Verschiebeweg des Flansches 46 gebildeten Gefahrenbereich zu kommen.

**Patentansprüche**

1. Gleiskettenspanneinrichtung (30), insbesondere bei einem Raupenschlepper (10), bestehend aus einem Gleiskettenrahmen (20), an dessen vorderem Ende ein Leitrad (29) verschiebbar gelagert und an dessen hinterem Ende fluchtend mit dem Leitrad ein Federwiderlager (40) fest montiert sind, wobei sich das Leitrad an dem Federwiderlager über eine zusammendrückbare Spreize abstützt, die eine Spannfeder (32), einen Gleiskettenjustierer (34), eine Verschiebestange (36) und ein Leitradjoch (38) umfaßt, die hintereinander in Reihe aneinanderliegend angeordnet sind und noch folgende Merkmale aufweisen :
— Die Spannfeder (32) stützt sich einerseits am Federwiderlager (40) und andererseits an einem Flansch (46) eines in die Spannfeder gesteckten Führungsteils (44) ab ;
— in einem Zylinder (72) ist ein Kolben (64) verschiebbar geführt, der durch Flüssigkeit, Schmierfett o. dgl. beaufschlagbar ist, das wahlweise über eine Befülleinrichtung (76, 78, 82) in den Zylinderraum (80) eingeführt, oder aber aus diesem durch eine Ablaßeinrichtung (82, 84) abgelassen werden kann ;
— von der Zylinder-Kolben-Kombination (72, 64) liegt ein Teil (64) an dem genannten Führungsteil (44) und das andere Teil (72) an dem einen Ende der Verschiebestange (36) an ;
— bei der Befüllung des Zylinderraumes (80) zur Erzeugung einer Vorspannung der Spannfeder (32) liegt das genannte andere Teil (72) der Zylinder-Kolben-Kombination (72, 64) an einem Anschlag (86) des Gleiskettenrahmens (20) an ;
— von Hand zu betätigende Vorspannmittel (96, 100, 108) arretieren die Spannfeder (32) in ihrer vorgespannten Lage und erlauben unter Aufrechterhaltung der Vorspannung einen Druckablaß im Zylinderraum (80) ;
gekennzeichnet durch folgende Merkmale :
a) Das Führungsteil wird durch ein hülsenförmiges Gleiskettenjustiergehäuse (44) gebildet, in dem der genannte Kolben (64) fest angeordnet und der genannte Zylinder (72) längsverschieblich geführt sind ;
b) das dem Kolben (64) abgewandte Ende des Zylinders (72) ist durch ein Kopfteil (74) verschlossen, das die genannte Befüll- und Ablaßeinrichtung (76-84) aufweist und bei Erzeugung der Federvorspannung an dem genannten Anschlag (86) anliegt ;
c) der Flansch (46) des Gleiskettenjustiergehäuses (44) weist sich gegenüberliegende Gleitstücke (48, 50) auf, die in Führungsnuten von Gleiskettenjustierführungen (52, 54) eingreifen, die beidseitig des Gleiskettenjustiergehäuses und parallel hierzu angeordnet sind ;
d) die genannten Vorspannmittel werden durch ein Paar Vorspanndistanzstücke (96, 100, 108) gebildet, die im Verschiebeweg des genannten Flansches (46) lösbar an den Gleiskettenjustierführungen (52, 54) befestigt sind und für den Flansch einen Anschlag bilden.

2. Vorrichtung nach Anspruch 1, dadurch gekennzeichnet, daß jede Gleiskettenjustierführung (52, 54) eine zur Spannfeder (32) gerichtete Anschlagfläche (92, 94) aufweist, von denen sowie vom Flansch (46) die Vorspanndistanzstücke (96, 100, 108) beidseitig umgriffen werden.

3. Vorrichtung nach Anspruch 1 oder 2, dadurch gekennzeichnet, daß jede Gleiskettenjustierführung (52, 54) einen oberen, die Führungsnut nach oben abdeckenden Flansch (56, 58) aufweist, in dem jeweils eine der Außenkontur der genannten Gleitstücke (48, 50) entsprechende Einschuböffnung (60, 62) angeordnet ist und zwar an einer Stelle, deren Abstand von dem genannten Federwiderlager (40) zumindest der Länge der entspannten Spannfeder (32) entspricht.

4. Vorrichtung nach Anspruch 1, 2 oder 3, dadurch gekennzeichnet, daß der Anschlag (86) des Gleiskettenrahmens (20) in Form eines umgedrehten U ausgebildet und lösbar auf einem Querrahmen (85) befestigt ist, der fest mit zwei auch die Gleiskettenjustierführungen (52, 54) bildenden Seitenschienen (22, 24) verbunden ist.

5. Vorrichtung nach einem der vorhergehenden Ansprüche, dadurch gekennzeichnet, daß die Vorspanndistanzstücke (96, 100) je eine Handhabe (104, 106) aufweisen, die oberhalb des Verschiebeweges des Gleiskettenjustierers (34) liegen.

6. Vorrichtung nach einem der Ansprüche 1 bis 4, dadurch gekennzeichnet, daß jedes Vorspanndistanzstück (108) zwei sich von der Oberseite vertikal nach unten erstreckende Fingereingriffsbohrungen (110, 112) aufweist.

**Claims**

1. A track tensioning device (30), especially for a crawler tractor (10), comprising a track frame (20), an idler wheel (29) slidably mounted on a forward portion of the frame (20), a spring end retainer (40) rigidly mounted on a rearward portion of the frame (20) in alignment with the idler wheel (29), and a compressible strut interposed between the spring retainer and the idler wheel and including a tension spring (32), a track adjuster (34), a sliding rod (36) and an idler wheel yoke (38) being arranged serially in end-to-end relationship with each other, and further comprising the following features :
— said tension spring (32) has a first end engaging said spring retainer (40) and a second end engaging a flange (46) of a guide means (44) received in the tension spring ;
— a piston (64) slidable in a cylinder (72) can be actuated by fluid, grease or the like, which can be selectively introduced by filling means (76, 78, 82) into the cylinder chamber (80) or else can be exhausted by exhausting means (82, 84) from the cylinder chamber ;
— one part (64) of the cylinder-piston combination (72, 64) engages said guide means (44), and the other part (72) of the combination engages one end of said sliding rod (36) ;
— said other part (72) of the cylinder-piston combination (72, 64) engages a stop (86) of the track frame (20) during filling of the cylinder chamber (80) for building up a preload of the tension spring (32) ;
— manually operable preload means (96, 100, 108) holds said tension spring (32) in its preloaded position and permits a pressure release in the cylinder chamber (80) while maintaining the preload ;
characterized by the following features :
a) said guide means is a tubular track adjuster housing (44) in which said piston (64) is rigidly arranged and in which said cylinder (72) is received for longitudinal movement ;

b) the end of the cylinder (72) opposite to said piston (64) is closed by a head portion (74), comprising said filling and exhausting means (76-84) and engaging said stop (86) during building up the preload of the spring ;

c) said flange (46) of said track adjuster housing (44) includes opposite sliding blocks (48, 50) received in guide channels of track adjuster guides (52, 54), located on both sides of and parallel to said track adjuster housing ;

d) said preload means are formed by a pair of preload spacers (96, 100, 108) releasably secured to said track adjuster guides (52, 54) in the sliding path of said flange (46) and forming a stop for the flange.

2. A device according to claim 1, wherein each track adjuster guide (52, 54) includes an abutment surface (92, 94) facing toward the tension spring (32), whereby the preload spacers (96, 100, 108) are sandwiched between the abutment surfaces and the flange (46).

3. A device according to claim 1 or 2, wherein each track adjuster guide (52, 54) includes an upper flange (56, 58) covering upwards the guide channel, whereby an access opening (60, 62) corresponding to the outer contour of said sliding blocks (48, 50) is provided in each of the upper flanges at a location spaced from said spring retainer (40) by a distance at least equal to the length of the released tension spring (32).

4. A device according to claim 1, 2 or 3, wherein said stop (86) of the track frame (20) has the shape of an inverted U and is releasably secured to a transverse frame member (85) being rigidly connected with a pair of side rails (22, 24) which also forms said track adjuster guides (52, 54).

5. A device according to one of the preceding claims, wherein each of the preload spacers (96, 100) includes a grip (104, 106) located above the sliding path of the track adjuster (34).

6. A device according to one of the claims 1 to 4, wherein each of the preload spacers (108) includes a pair of finger insertion bores (110, 112) extending vertically downwards from the upper surface.

**Revendications**

1. Dispositif (30) de mise en tension des chenilles, en particulier pour tracteur à chenilles (10), constitué par un châssis de chenille (20) à l'extrémité avant duquel est monté de façon déplaçable une roue avant (29) et à l'extrémité arrière duquel est monté à poste fixe une portée de ressort (40) alignée avec la roue avant, cette roue avant prenant appui sur cette portée de ressort par l'intermédiaire d'une béquille télescopique comprenant un ressort de mise en tension (32), un dispositif (34) de réglage de la chenille, une barre coulissante (36) et une chape (38) recevant la roue avant, ces éléments étant disposés successivement l'un derrière l'autre en rangée, et présentant en outre les particularités suivantes :

— le ressort de mise en tension (32) prend appui, d'une part, sur la portée de ressort (40) et, d'autre part, sur la bride (46) d'un organe de guidage (44) engagé dans le ressort de mise en tension ;

— un piston (64) est guidé de façon coulissante dans un cylindre (72), ce piston pouvant être soumis à l'action d'un liquide, d'une graisse ou d'un moyen analogue qui est introduit sélectivement dans la chambre (80) du cylindre par un dispositif de remplissage (76, 78, 82) ou bien qui peut être évacué hors de cette chambre par un dispositif d'évacuation (82, 84) ;

— parmi la combinaison cylindre-piston (72, 64) l'un des éléments (64) s'applique contre l'organe de guidage (44), tandis que l'autre élément (72) s'applique contre une extrémité de la barre coulissante (36) ;

— lors du remplissage de la chambre (80) du cylindre pour établir une précontrainte dans le ressort de mise en tension (32), l'autre élément (72) de la combinaison cylindre-piston (72, 64) s'applique contre une butée (86) du châssis (20) de la chenille ;

— des organes de précontrainte (96, 100, 108) pouvant être actionnés à la main verrouillent le ressort de mise en tension (32) dans sa condition de précontrainte et permettent l'évacuation de la pression à partir de la chambre (80) du cylindre tout en entretenant la précontrainte :
caractérisé par les particularités suivantes :

a) l'organe de guidage est constitué par un carter en forme de douille (44) de réglage de la chenille, dans lequel le piston précité (64) est monté à poste fixe, le cylindre précité (72) étant guidé dans ce carter de façon à pouvoir coulisser longitudinalement ;

b) l'extrémité du cylindre (72) opposée au piston (64) est obturée par une culasse (74) qui comporte le dispositif de remplissage et d'évacuation précité (76-84) et qui s'applique contre la butée précitée (86) lorsqu'une précontrainte est exercée sur le ressort ;

c) la bride (46) du carter (44) de réglage de la chenille comporte des coulisseaux opposés (48, 50) qui s'engagent dans des rainures de guidage de guides (52, 54) de réglage de la chenille, ces guides étant disposés de part et d'autre du carter de réglage de la chenille et étant parallèles à celui-ci ;

d) les organes précités de précontrainte du ressort sont formés par une paire de cales de précontrainte (96, 100, 108) qui sont fixés amoviblement sur les guides (52, 54) de réglage de la chenille dans la trajectoire de déplacement en translation de la bride précitée (46) et qui constituent une butée pour cette bride.

2. Dispositif suivant la revendication 1, caractérisé en ce que chaque guide (52, 54) de réglage de la chenille présente une surface de butée (92, 94) orientée vers le ressort de mise en tension (32), les cales de précontrainte (96, 100, 108) étant entourées des deux côtés par cette surface de butée ainsi que par la bride (46).

3. Dispositif suivant la revendication 1 ou 2, caractérisé en ce que chaque guide (52, 54) de réglage de la chenille présente une aile supérieure (56, 58) recouvrant la rainure de guidage vers le haut et dans laquelle est ménagé chaque fois un orifice d'introduction (60, 62) correspondant au contour extérieur des coulisseaux précités (48, 50), plus spécialement en un point dont la distance à la portée de ressort précitée (40) correspond au moins à la longueur du ressort de mise en tension (32) à l'état détendu.

4. Dispositif suivant la revendication 1, 2 ou 3, caractérisé en ce que la butée (86) du châssis de chenille (20) a une forme en U inversé et est fixée amoviblement sur un châssis ou cadre transversal (85) qui est relié rigidement à deux profilés latéraux (22, 24) formant également les guides (52, 54) de réglage de la chenille.

5. Dispositif suivant l'une quelconque des revendications précédentes, caractérisé en ce que les cales de précontraintre (96, 100) présentent chacune une poignée (104, 106) qui se trouve au-dessus de la trajectoire de coulissement ou de translation du dispositif (34) de réglage de la chenille.

6. Dispositif suivant l'une quelconque des revendications 1 à 4, caractérisé en ce que chaque cale (108) comporte deux perçages (110, 112) d'engagement des doigts, s'étendant verticalement vers le bas depuis sa face supérieure.

FIG. 7

FIG. 1

FIG. 3

FIG. 4

FIG. 2

FIG. 5

FIG. 6